Europäisches Patentamt

European Patent Office

Office européen des brevets

(19)

(11) Numéro de publication: **0 358 563**
**A1**

(12)

# DEMANDE DE BREVET EUROPEEN

(21) Numéro de dépôt: **89402412.4**

(51) Int. Cl.⁵: **A 01 D 46/28**

(22) Date de dépôt: **05.09.89**

(30) Priorité: **05.09.88 FR 8811590**

(43) Date de publication de la demande:
**14.03.90 Bulletin 90/11**

(84) Etats contractants désignés:
**AT BE CH DE ES FR GB GR IT LI LU NL SE**

(71) Demandeur: **POLY-VECTURE**
**Zone Industrielle Avenue Léon Jouhaux**
**F-33210 Langon (FR)**

(72) Inventeur: **Poncet, Bernard**
**F-33170 Gradignan (FR)**

(74) Mandataire: **Nony, Michel et al**
**Cabinet NONY & CIE 29, rue Cambacérès**
**F-75008 Paris (FR)**

(54) **Machine à recolter les baies et notamment à vendanger.**

(57) L'invention est relative à un machine à récolter les baies, notamment à vendanger, comportant un châssis enjambeur (1) sur lequel sont montés deux ensembles d'organes secoueurs (4a,4b), chacun d'un côté du plan médian de la machine, lesdits organes secoueurs étant constitués de tiges courbées dans un plan sensiblement horizontal et présentant leur convexité en direction dudit plan médian.

Chaque extrémité de chaque tige est articulée sur un support monté pivotant autour d'un axe sensiblement vertical, des moyens d'entraînement (12) étant prévus pour déplacer en phase les supports des tiges situés d'un même côté du plan médian de manière à déplacer les tiges parallèlement à elles-mêmes, et pour déplacer en opposition de phase les supports des tiges situés d'un des côtés du plan médian par rapport aux supports des tiges situés de l'autre côté du plan médian de manière que, lorsque l'un des ensembles de tiges se rapproche du plan médian, l'autre ensemble de tiges s'en éloigne.

Fig.1

EP 0 358 563 A1

Bundesdruckerei Berlin

## Description

### Machine à récolter les baies et notamment à vendanger

La présente invention concerne une machine à récolter les baies, et notamment à vendanger, et plus particulièrement une telle machine du type comportant un châssis enjambeur sur lequel sont montés deux ensembles d'organes secoueurs, chacun d'un côté du plan médian de la machine, lesdits organes secoueurs étant constitués de tiges courbées dans un plan sensiblement horizontal et présentant leur convexité en direction dudit plan médian.

De telles machines sont déjà connues mais elles présentent généralement les inconvénients d'assurer une récole imparfaite d'une part, et d'autre part d'endommager les plants.

La présente invention vise à pallier ces inconvénients.

A cet effet, l'invention a pour objet une machine à récolter les baies, et notamment à vendanger, comportant un châssis enjambeur sur lequel sont montés deux ensembles d'organes secoueurs, chacun d'un côté du plan médian de la machine, lesdits organes secoueurs étant constitués de tiges courbées dans un plan sensiblement horizontal et présentant leur convexité en direction dudit plan médian, caractérisée par le fait que chaque extrémité de chaque tige est articulée sur un support monté pivotant autour d'un axe sensiblement vertical, des moyens d'entraînement étant prévus pour déplacer en phase les supports des tiges d'un même côté du plan médian de manière à déplacer les tiges parallèlement à elles-mêmes, et pour déplacer en opposition de phase les supports des tiges situés d'un des côtés du plan médian par rapport aux supports des tiges situés de l'autre côté du plan médian de manière que, lorsque l'un des ensembles de tiges se rapproche du plan médian, l'autre ensemble de tiges s'en éloigne.

Dans un mode de réalisation particulier de l'invention, lesdits moyens d'entraînement sont reliés aux supports correspondant à une des extrémités des tiges de chacun des ensembles de tiges, des moyens, comportant éventuellement des amortisseurs, assurant la liaison entre lesdits supports correspondant à une des extrémités de tiges, et les supports correspondant à l'autre extrémité des tiges.

Selon un autre mode de réalisation, lesdits moyens d'entraînement sont reliés à tous les supports de tiges.

Ces moyens d'entraînement peuvent notamment comprendre un arbre muni de deux excentriques.

On décrira maintenant à titre d'exemple non limitatif un mode de réalisation particulier de l'invention en référence aux dessins schématiques annexés dans lesquels :

- la figure 1 est une vue de dessus d'une machine selon l'invention,
- la figure 2 en est une vue de face,
- la figure 3 est une vue à plus grande échelle d'un ensemble d'organes secoueurs de cette machine, et

- la figure 4 est une vue des ensembles d'organes secoueurs dans une variante de réalisation.

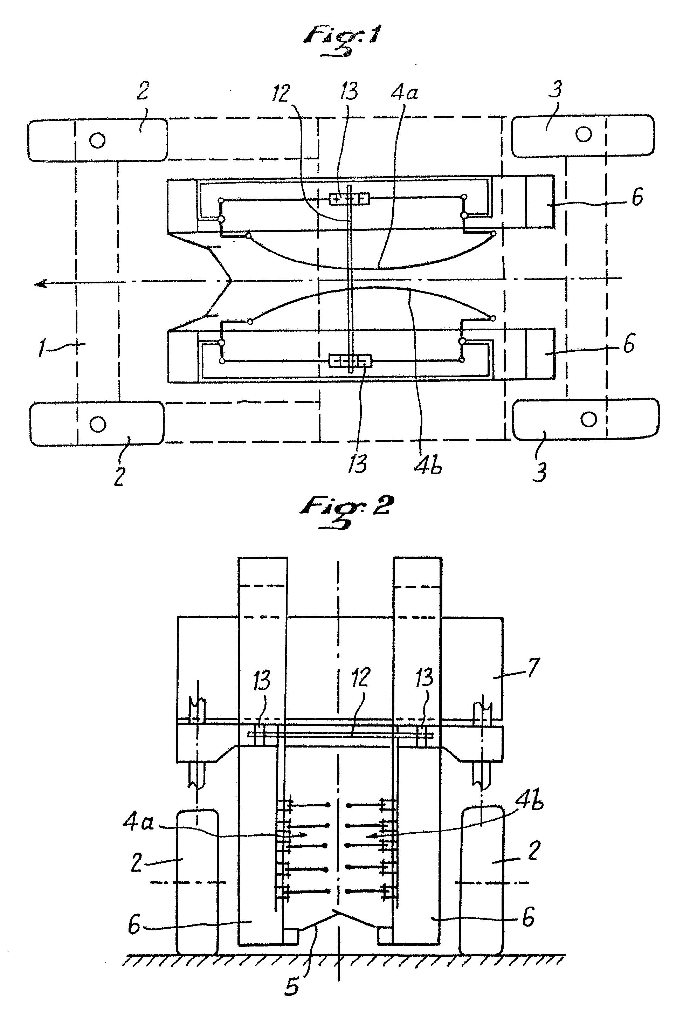

La machine des figures 1 à 3 comporte de façon connue un châssis porteur 1 en forme de tunnel pour lui permettre d'enjamber un rang de vignes.

Des roues avant 2 et arrière 3 sont montées sur ce châssis pour permettre à la machine de rouler sur le sol.

Ce châssis porte également deux ensemble 4a et 4b d'organes secoueurs pour secouer les plants de vignes au fur et à mesure de son avance, de telle sorte que les grappes ou les raisins individuels tombent sur un ensemble d'écailles 5 d'où elles sont amenées par deux convoyeurs 6 dans une benne de réception 7.

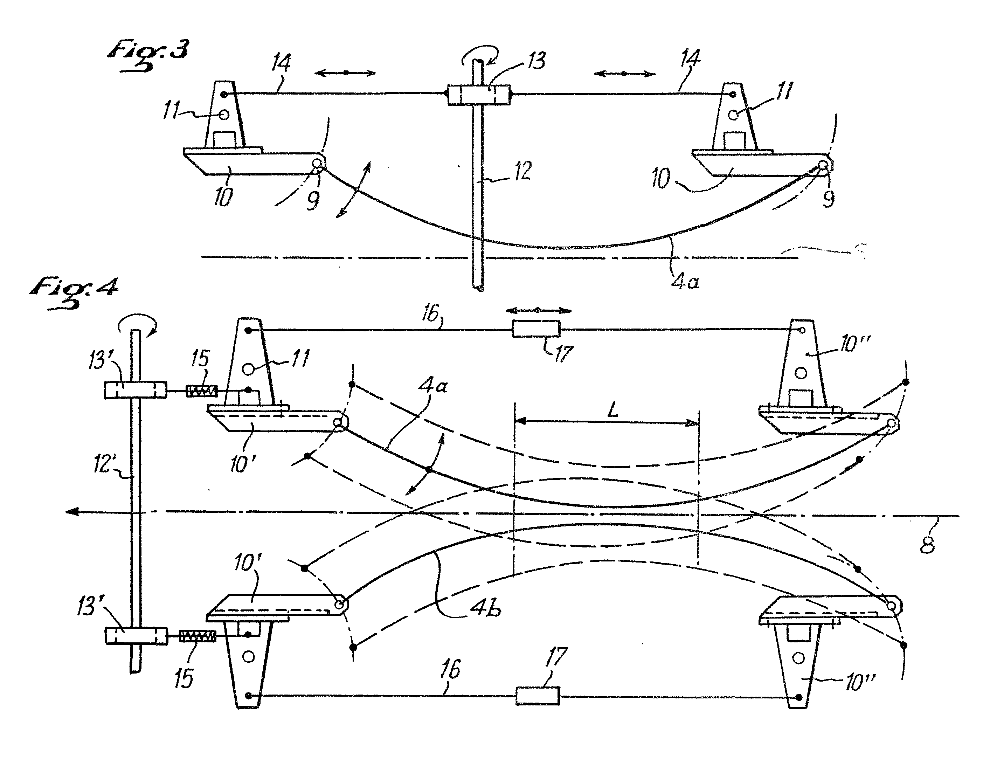

Si l'on se réfère maintenant plus particulièrement à la figure 3, on voit que chaque organe secoueur 4a (ou 4b) se présente sous la forme d'une tige courbée présentant sa convexité en direction de l'axe médian 8 de la machine. Ces tiges sont en position normale de fonctionnement sensiblement horizontale.

Les extrémités des tiges 4a sont montées à chacune de leurs extrémités par une articulation verticale 9 ou, en variante, par une rotule permettant un certain débattement vertical, sur des supports en équerre 10, eux-mêmes montés à rotation sur le châssis de la machine autour d'axes verticaux 11.

Les distances entre les axes 9 et 11 à l'avant et à l'arrière de la machine sont sensiblement égales ou légèrement différentes.

Un arbre d'entraînement 12 monté également à rotation sur le châssis de la machine et entraîné par tout moyen convenable, porte à chacune de ses extrémités un excentrique 13 relié par des biellettes 14 à l'extrémité des supports 10 opposée aux articulations 9.

On constate que lorsque l'arbre 12 tourne, il provoque des oscillations des supports 10 autour des axes 11 de sorte que les articulations 9 décrivent des arcs de cercles parallèles. Ainsi, les organes secoueurs 4a se déplacent en restant parallèles à eux-mêmes alternativement en se rapprochant du plan médian 8 et en s'en éloignant. Les excentriques 13 sont montés de telle sorte que lorsque les organes secoueurs 4a se rapprochent du plan 8, les organes 4b s'en éloignent, et réciproquement.

Dans la variante de la figure 4, l'arbre d'entraînement 12' est disposé à l'avant de la machine et les excentriques 13' sont reliés par des biellettes 15 uniquement aux supports avant 10'. Ces supports avant 10' sont reliés aux supports arrière 10" par des tiges 16 incorporant des amortisseurs 17.

Les excentriques 13' étant montés sur l'arbre 12' diamétralement opposé, on constate que, dans ce cas également, les supports 10' et 10" situés d'un même côté de la machine se déplacent en phase de sorte que les organes secoueurs 4a et 4b respectivement se déplacent parallèlement à eux-mêmes, alors que les supports 10′ et 10″ situés d'un des côtés de la machine se déplacent en opposition de phase par rapport aux supports 10′ et 10″ situés de l'autre côté de la machine, de sorte que, lorsque les organes secoueurs 4a se rapprochent du plan médian 8, les supports 4b s'en éloignent, et réciproquement.

Un tel agencement présente l'avantage de réaliser un secouage efficace des plans de vignes sur une grande longueur L sans pour autant les endommager, du fait que l'écart entre les organes secoueurs 4a et les organes secoueurs 4b restent sensiblement constants. En outre, aucun risque d'emballement des organes secoueurs n'est à craindre, du fait que, aussi bien ces organes eux-mêmes que leurs moyens d'entraînement sont rigides et positivement contrôlés par la rotation des arbres 12 ou 12′.

Diverses variantes et modifications peuvent bien entendu être apportées à la description qui précède sans sortir pour autant du cadre ni de l'esprit de l'invention.

**Revendications**

1. Machine à récolter les baies, notamment à vendanger, comportant un châssis enjambeur (1) sur lequel sont montés deux ensembles d'organes secoueurs (4a,4b), chacun d'un côté du plan médian (8) de la machine, lesdits organes secoueurs étant constitués de tiges courbées dans un plan sensiblement horizontal et présentant leur convexité en direction dudit plan médian, caractérisée par le fait que chaque extrémité de chaque tige est articulée sur un support (10; 10′,10″) monté pivotant autour d'un axe (11) sensiblement vertical, des moyens d'entraînement (12;12′) étant prévus pour déplacer en phase les supports des tiges situés d'un même côté du plan médian de manière à déplacer les tiges parallèlement à elles-mêmes, et pour déplacer en opposition de phase les supports des tiges situés d'un des côtés du plan médian par rapport aux supports des tiges situés de l'autre côté du plan médian de manière que, lorsque l'un des ensembles de tiges se rapproche du plan médian, l'autre ensemble de tiges s'en éloigne.

2. Machine selon la revendication 1, caractérisée par le fait que lesdits moyens d'entraînement sont reliés aux supports correspondant à une des extrémités des tiges de chacun des ensembles de tiges, des moyens (16) assurant la liaison entre lesdits supports correspondant à une des extrémités des tiges et les supports correspondant à l'autre extrémité des tiges.

3. Machine selon la revendication 1, caractérisée par le fait que lesdits moyens d'entraînement sont reliés à tous les supports de tiges.

4. Machine selon l'une quelconque des revendications 1 à 3, caractérisée par le fait que lesdits moyens d'entraînement comprennent un arbre (12;12′) muni de deux excentriques (13;13′).

5. Machine selon la revendication 2, caractérisée par le fait que des amortisseurs (17) sont montés sur lesdits moyens de liaison (16).

EP 0 358 563 A1

*Fig. 1*

*Fig. 2*

Fig.3

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-266259 (BRAUD)<br>* colonne 4, ligne 57 – colonne 9, ligne 53; figures 1-10 *<br>--- | 1-3 | A01D46/28 |
| A | EP-A-267829 (BRAUD)<br>* colonne 8, ligne 35 – colonne 11, ligne 38; figures 1-6 *<br>----- | 1-3 | |

DOMAINES TECHNIQUES RECHERCHES (Int. Cl.5 )

A01D

Le présent rapport a été établi pour toutes les revendications

| Lieu de la recherche | Date d'achèvement de la recherche | Examinateur |
|---|---|---|
| LA HAYE | 29 NOVEMBRE 1989 | HERYGERS J.J. |